(19) Europäisches Patentamt / European Patent Office / Office européen des brevets

(11) **EP 2 006 334 A1**

(12) **EUROPEAN PATENT APPLICATION**
published in accordance with Art. 153(4) EPC

(43) Date of publication:
**24.12.2008 Bulletin 2008/52**

(51) Int Cl.:
*C08L 101/00* (2006.01)   *C08K 5/20* (2006.01)
*C08K 7/04* (2006.01)   *C08K 13/04* (2006.01)
*C09K 5/08* (2006.01)

(21) Application number: **07741210.4**

(22) Date of filing: **06.04.2007**

(86) International application number:
**PCT/JP2007/057774**

(87) International publication number:
**WO 2007/116973 (18.10.2007 Gazette 2007/42)**

(84) Designated Contracting States:
**DE**

(30) Priority: **07.04.2006 JP 2006106363**

(71) Applicant: **NEC Corporation**
**Minato-ku**
**Tokyo 108-8001 (JP)**

(72) Inventors:
• **NAKAMURA, Akinobu**
**Tokyo 108-8001 (JP)**

• **IJI, Masatoshi**
**Tokyo 108-8001 (JP)**
• **YANAGISAWA, Tsunenori**
**Tokyo 108-8001 (JP)**
• **HIRANO, Keiji**
**Tokyo 108-8001 (JP)**

(74) Representative: **Glawe, Delfs, Moll**
**Patentanwälte**
**Postfach 26 01 62**
**80058 München (DE)**

(54) **THERMALLY CONDUCTIVE RESIN MATERIAL AND MOLDED BODY THEREOF**

(57) The thermally conductive resin material of the present invention has an excellent thermal conductive property without impairing the intrinsic practical properties such as the forming processability, lightness in weight and mechanical strength possessed by resins and has an anisotropic thermal conductive property capable of controlling the directionality and the transfer amount of the thermal conduction. The thermally conductive resin material of the present invention is a thermally conductive resin material including a base material of a thermoplastic resin (A) and a fibrous filler (C), wherein an organic compound (B) incompatible with the resin component is present as dispersed particles in the resin component, and two or more elements of the fibrous filler (C) are in contact with the surface of each of the dispersed particles or are located in each of the dispersed particles.

Fig. 1

**Description**

Technical Field

The present invention relates to a thermally conductive resin material excellent in thermal conductive property, mechanical strength, forming processability, antistatic property and electromagnetic wave shielding property, and a formed body thereof.

Background Art

Because thermoplastic resins have excellent forming processability, lowness in cost, corrosion resistance and the like, thermoplastic resins are utilized as important materials in various industrial fields such as electronic components, machine components, automobile components, office supplies, household tableware, interior and exterior materials for electric appliances. In particular, in the applications to electronic apparatuses, thermal conductive property for efficiently releasing the heat generated from various devices is demanded, but thermoplastic resins are generally insufficient in thermal conductive property. When such resin materials poor in thermal conductive property are applied to the components and the chassis materials for electronic apparatuses or the like, the heat release is inhibited in these components and the like and consequently failure or breakdown is induced in these apparatuses and elements.

In this connection, generally known as a method for improving the thermal conductive property of resins is a method in which thermally conductive fillers are added to the resins. For example, high thermal conductivity inorganic fillers such as alumina, boron nitride and carbon are widely used; in particular, carbon fiber is attracting attention as a material excellent in practical use because carbon fiber is lighter in weight as compared to other fillers, and additionally relatively lower in price and almost free from adverse environmental effects such as toxicity.

For example, in the composition disclosed in Patent Document 1, a vapor-grown carbon fiber of 50 to 200 nm in diameter was kneaded with a thermoplastic resin in a mixing ratio of 70% by weight and thus a maximum thermal conductivity of 7.5 W/m.K has been obtained.

Additionally, in the thermally conductive resin material disclosed in Patent Document 2, by dispersing a fibrous carbon of 1 $\mu$m or less in diameter selectively in one resin phase in a mixing ratio of 10% by weight, in a mixture composed of two or more resins, a maximum thermal conductivity of 0.73 W/m.K has been obtained. A method in which a mixture prepared by mutual mixing of different types of resins is made to have a local characteristic region by unevenly distributing the filler in a specified resin phase of the mixture is referred to as double percolation, and is described as a method for producing a conductive resin in Patent Document 3 and Non-Patent Document 1.

However, several problems are found in the methods disclosed in Patent Documents 1 and 2. The problem of Patent Document 1 is that no high thermal conductivity is obtained if a carbon fiber is not added in a high mixing ratio. For example, even a mixture containing a carbon fiber in an amount the same as the amount of the resin, in an amount of 50% by weight, attains at most a thermal conductivity of approximately 5 W/m.K, this value being lower by one order or two orders of magnitude as compared to ceramics and metal materials. One reason for this is the fact that a fine carbon fiber applied as a filler has a characteristic of extremely easily undergoing cohesion and hence it is difficult to disperse the carbon fiber in the resin. In other words, a carbon fiber has a chemically inert structure and poor in the affinity with most resins, and hence it is difficult to disperse a carbon fiber in a resin, causing a problem that an improvement effect of the thermal conductivity can be obtained only if a carbon fiber is added in a large amount. As a problem to be caused when a carbon fiber is mixed in a large mixing ratio, mentioned is a problem that the melt viscosity of the resin is remarkably increased and accordingly the injection molding widely applied to thermoplastic resins cannot be conducted. The fact that forming can be conducted only with some specific forming methods constitutes a factor that degrades the practicability and the applicability of highly thermally conductive resins.

On the other hand, the problem of Patent Document 2 is that a region different in properties is locally formed and thus the mechanical strength is largely degraded. Specifically, the resin phase in which the fibrous carbon is unevenly distributed and the matrix resin phase are largely different in mechanical properties from each other, and hence interfacial fracture tends to occur to involve a crucial drawback as a practical material. Further, although the thermal conductivity of the resin material is improved as compared to thermal conductivity of a resin material obtained by common mixing methods, the thermal conductivity in any case is at most a value less than 1 W/m.K so as not to reach the practical level required for a thermally conductive material.

Further, due to the increase of the heat generation density accompanying the recent high integration of devices and the miniaturization and multifunction of products, the problem of the heat release of electronic apparatuses and electronic components has become serious. In particular, in remarkably advancing mobile information terminals, a problem is being raised by the fact that heat is generated from elements in such an amount to cause low-temperature burn; accordingly, demanded are materials not only capable of directly transferring the heat to the chassis and but capable of controlling the directionality and the transfer amount of the thermal conduction of the material itself and safely conducting heat release. In the materials applied to electronic apparatuses and electronic components, demanded are new materials provided with excellent thermal conductive property in addition to the intrinsic properties possessed by existing resins, ceramics or metals. In particular, as for resin materials, demanded are materials possessing thermal conductive properties capable of controlling the direction and the transfer amount of the thermal conduction without impairing the practicality involving favorable properties of resins such as the forming processability, lightness in weight and lowness in cost.

Patent Document 1: Japanese Patent Laid-Open No. 2005-325345
Patent Document 2: Japanese Patent Laid-Open No. 2005-54094
Patent Document 3: Japanese Patent No. 2603511
Non-Patent Document 1: Tokodai (Tokyo Institute of Technology) Technology, Vol. 3, pp. 7, March 2000

The issue of the present invention is to provide a thermally conductive resin material having an excellent thermal conductive property without impairing the intrinsic practical properties such as the forming processability, lightness in weight and mechanical strength possessed by resins and having an anisotropic thermal conductive property capable of controlling the direction and the transfer amount of the thermal conduction, and a formed body of the thermally conductive resin material.

Disclosure of the Invention

The present inventors focused attention on the fact that in a molded body including a resin and a filler, the morphology of the molded body strongly affects the thermal conductive property of the molded body, analyzed in detail the melt viscosity, the fluidity, the dispersion state of each of the components, the intersurface interaction and the like of a mixture composed of a thermally conductive filler, in particular, a fibrous filler, a thermoplastic resin and various additives, and further verified the correlation between the morphology and the thermal conductive property of each of the molded bodies composed of individual components. Consequently, obtained was a knowledge that a thermoplastic resin is converted into a substance having an excellent thermal conductive property by mixing with a base material of the thermoplastic resin, a particle-like organic compound incompatible with the thermoplastic resin, and a fibrous filler, so as for the fibrous filler to be brought into contact with the particle-like organic compound or to be located in the particle-like organic compound.

In particular, discovered was the fact that by mixing in specific range of quantity of a fibrous thermally conductive filler having a specific size and an organic compound incompatible with the thermoplastic resin having a specific molecular structure, the morphology of the above-described mixture is varied largely and thus an excellent thermal conductive property is obtained. In other words, discovered was the fact that by mixing the above-described organic compound having a specific molecular structure, the dispersion of the filler in the melted resin is remarkably promoted, and at the same time, the interaction between the base material resin and the filler is enhanced, and thus an optimal morphology to promote the thermal conduction is formed.

The thermal conduction promotion mechanism of the present invention is not necessarily clear; probably, the addition of the incompatible organic compound to the thermoplastic resin improves the dispersion of the fibrous filler, the filler elements are brought into partial contact with each other, and thus a network structure of the filler is formed in the resin to attain a high thermal conductive property. In this case, a low-viscosity incompatible organic compound is finely dispersed to decrease the melt viscosity of the resin particularly when mixed with the melted base material of the thermoplastic resin, thus the dispersibility of the fibrous filler intrinsically tending to undergo cohesion is remarkably enhanced, at the same time the organic compound has a strong interaction with the surface of the filler to serve as the binder (a substance to partially assemble a plurality of the fibrous filler elements) for mutually binding the filler elements, and conceivably the network structure of the fibrous filler is thus formed. Such a network structure is specifically formed, in particular, by a fibrous filler having a specific fiber length and a specific fiber diameter with a small mixing amount. Additionally, by the synergetic effect with the incompatible organic compound, a state is formed in which the fibrous filler elements are brought into contact with each other or into extreme proximity to each other, accordingly the heat propagation loss is reduced, and hence even a small mixing amount of the filler attains a sufficiently high thermal conductive property. Thus, obtained is a knowledge that the mixing amount of the filler can be thereby reduced and an injection molding the same as applicable to common thermoplastic resins comes to be feasible.

Additionally, the fibrous filler is not unevenly distributed in a specific resin phase, and hence the interface fracture is hardly generated and no strength degradation occurs. Further, the base material resin is decreased in melt viscosity by the incompatible organic compound, and consequently, facilitated is the orientation of the fibrous filler in the flow direction of the resin or the forming surface direction of the resin, and thus an anisotropic thermal conductive property is obtained. It is known that generally a fibrous filler contained in a resin in a large amount and oriented in a specific direction in the resin offers a cause for the degradation of the mechanical strength and the warping in a molded body;

however, in the present invention, the mixing ratio of the fibrous filler is extremely smaller than conventional cases, additionally reinforcement effect is achieved by the network structure formed by the incompatible organic compound added in a minute amount and the fibrous filler, and hence the degradation of the mechanical strength and the generation of warping can be effectively suppressed in the formed body.

The thermal conductivity of the above-described thermally conductive resin material depends in many cases on the type and the addition amount of the added filler, and the thermal conductivity is varied by one order to two orders of magnitude depending on the type of the added filer. Therefore, by varying the type and the mixing ratio of the filler according to the requested level of the thermal conductivity, the thermal conductivity of the resin can be optionally controlled; discovered was the fact that when the above-described organic compound is used together with an existing filler, the thermal conductivity is remarkably improved as compared to the case where only the filler is used in the same mixing ratio without using the above-described organic compound, and at the same time, the control of the direction and the transfer amount of the thermal conduction comes to be feasible. On the basis of such knowledge, the present invention was accomplished.

Specifically, the present invention relates to a thermally conductive resin material comprising a base material of a thermoplastic resin (A) and a fibrous filler (C), and is characterized in that an organic compound (B) incompatible with the resin component is present as dispersed particles in the resin component, and two or more elements of the fibrous filler (C) are in contact with the surface of each of the dispersed particles of the organic compound (B) or are located in each of the dispersed particles of the organic compound (B).

Additionally, the present invention relates to a thermally conductive resin formed body, characterized by being formed by using the above-described thermally conductive resin material.

The thermally conductive resin material and the thermally conductive resin formed body of the present invention have an excellent thermal conductive property without impairing the intrinsic properties such as the forming processability, lightness in weight and mechanical strength possessed by resins and have an anisotropic thermal conductive property capable of controlling the direction and the transfer amount of the thermal conduction.

Brief Description of the Drawings

Figure 1 is a schematic view illustrating the structure of a thermally conductive resin formed body of the present invention;
Figure 2 is a photographed image showing the network structure of an example of the thermally conductive resin formed body of the present invention;
Figure 3 is a view presenting the thermography showing the thermal conductive property of an example of the thermally conductive resin formed body of the present invention in comparison with a conventional example; and
Figure 4 is a view presenting the thermography showing the anisotropic thermal conductive property of an example of the thermally conductive resin formed body of the present invention in comparison with a conventional example.

Description of Symbols

1    Fibrous filler (C)
2    Organic compound (B) dispersed in a particle-like manner
3    Base material of thermoplastic resin (A)

Best Mode for Carrying Out the Invention

The thermally conductive resin material of the present invention is a thermally conductive resin material comprising a base material of a thermoplastic resin (A) and a fibrous filler (C), and is characterized in that an organic compound (B) incompatible with the resin component is present as dispersed particles in the resin component, and two or more elements of the fibrous filler (C) are in contact with the surface of each of the dispersed particles of the organic compound (B) or are located in each of the dispersed particles of the organic compound (B).

The thermoplastic resin (A) used in the thermally conductive resin material of the present invention serves as the base material of the thermally conductive resin material, and any thermoplastic resin can be applied as long as the thermoplastic resin is used in the field of forming. Preferable examples of such a thermoplastic resin (A) may include polystyrene resins such as ABS and polyester resins, and these can be used each alone or in appropriate combinations of two or more thereof. Polystyrene resins are widely used for electric products, are excellent in practical properties such as heat resistance, abrasion resistance, chemical resistance and workability and additionally have advantages such that mixing with various fillers and other resins and forming processing can be easily conducted.

Additionally, although the above-described polyester resins may be synthetic resins, biodegradable polyester resins are preferable because they can suppress the environmental destruction. Examples of the biodegradable polyester resins may include biomass-derived resins and the derivatives thereof. The biomass-derived resins mean those resins which include as the main components the resins produced by using biomass as raw materials. The derivatives thereof mean the resins obtained by substituting or modifying part of the molecular structure of the biomass-derived resins with other compounds or functional groups. As compared to petroleum resins, biomass-derived resins are excellent in biological affinity and are particularly preferable as the materials for apparatuses and components brought into direct contact with human body and living organism. Additionally, biomass-derived resins have advantageous effects, enabling drastic reduction of the environmental load inherent to the materials themselves, namely, the advantageous effects such as natural resources saving measures and $CO_2$ emission reduction. Specific examples of such biomass-derived resins may include polylactic acid (PLA), polycaprolactone (PCL), polyhydroxybutyric acid (PHB), polyhydroxyalkanoate (PHA), polybutylene succinate (PBS), cellulose acetate and starch resin. Examples of the derivatives of these may include copolymers thereof with aromatic carboxylic acids, alicyclic carboxylic acids, saturated aliphatic carboxylic acids, unsaturated aliphatic carboxylic acids, aliphatic diols, alicyclic diols and aromatic diols.

Particularly preferable examples among these may include polylactic acid (PLA) and the derivatives thereof; examples of the polylactic acid derivatives may include polyethylene glycol-modified PLA and acrylic acid ester-modified PLA. Additionally, examples of the polylactic acid alloy may include the alloys with PCL, PBS, polycarbonate and polymethylmethacrylate. The above-described polyester resins may be used each alone or in combinations of two or more thereof and may also be used in optional combinations with other thermoplastic resins.

The organic compound (B) used in the thermally conductive resin material of the present invention is incompatible with the thermoplastic resin (A) and forms a particle-like dispersion phase in the resin component. The term, incompatible, as referred to herein means that a dispersion phase is formed with a size of 0.1 $\mu$m or more in relation to the resin and exhibits an optical incompatibility in the visible light region. It is to be noted that in the mutual mixing of different types of resins or in the mixing of a resin and an organic compound, the occurrence of thermodynamically complete compatibility (formation of one phase in terms of molecular level) is extremely rare; even in the case where apparently uniform compatibility is attained, generally the state of occurrence is a dispersion state in a microscopic field of view of the order of submicrons or less. Accordingly, the concept of "incompatibility" or "not being completely compatible" comprehends the whole of the mixed systems composed of different types of resins or the mixed systems composed of resins and organic compounds. The incompatibility in the organic compound (B) used in the present invention exhibits an incompatible state in a macroscopic field of view, namely, in an optical field of view in the visible light region, inclusive of a partially compatible state.

The organic compound (B) is preferably dispersed in the thermoplastic resin (A) with an average particle size falling within a range from 0.1 to 500 $\mu$m. When the average particle size of the organic compound (B) is 0.1 $\mu$m or more, incompatibility is found in the optical field of view in the visible light region, the network structure composed of the particles of the organic compound and the below-described fibrous filler (C) is formed, and thus the improvement of the thermal conductive property can be achieved. On the other hand, when the average particle size is 500 $\mu$m or less, the cohesion in the thermoplastic resin (A) can be suppressed and thus the interfacial fracture or the like due to the macroscopic phase segregation can be suppressed.

It is to be noted herein that the average particle size may be defined as the measurement value based on microscopy.

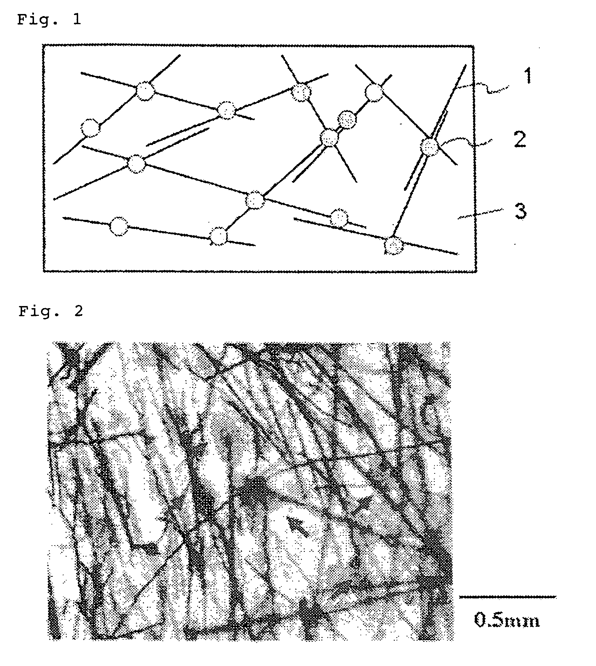

Additionally, the organic compound (B) having such an average particle size forms, through an interaction with the fibrous filler (C), a combined body in which two or more elements of the fibrous filler (C) are in contact with each of the particles of the organic compound (B) or are located in each of the particles of the organic compound (B). Owing to the formation of the combined body in the base material resin, as shown in the schematic view of Figure 1, each of the particles of the organic compound (B) 2 serves as a binder for two or more elements of the fibrous filler (C) 1, and thus a network can be formed in the base material of the thermoplastic resin (A) 3. When the average particle size of the organic compound (B) is half or less the average fiber length of the fibrous filler, the cohesion of the fibrous filler (C) on the particle-like organic compound (B) is suppressed, and it is possible to promote the mutual contact of the elements of the fibrous filler (C) in a network manner, preferably in a two-dimensional manner, through the intermediary of the particle-like organic compound (B). Accordingly, the network structure based on the fibrous filler (C) and the organic compound (B) dispersed in the base material thermoplastic resin (A) is easily formed, and even when the mixing amount of the fibrous filler (C) is small, there can be obtained a material sufficiently high in thermal conductive property. The combination form between the organic compound (B) and the fibrous filler (C) may attribute any of the combinations due to the factors such as physical adsorption, electrostatic adsorption, hydrophobic interaction, magnetic adsorption and geometric factors, in addition to the chemical bonds such as hydrogen bonds and coordination bonds.

Preferably, the organic compound (B) is lower in melt viscosity than the thermoplastic resin (A) and lower in melting point than the thermoplastic resin (A). Such an organic compound (B) decreases the melt viscosity and improves the fluidity of the melted mixture with the thermoplastic resin (A), and can uniformly disperse the fibrous filler in an easy manner. Specifically, the melting point of the organic compound (B) is preferably 80 to 200°C. When the melting point of the organic compound (B) is 80°C or higher, in the components and the chassis of the products accompanied by the heat release such as electronic apparatuses using resin materials, softening due to heat and the elution of the organic compound (B) from these components can be suppressed. On the other hand, when the melting point of the organic compound (B) is 200°C or lower, even in a case where the a biodegradable polyester resin such as easily thermally decomposable polylactic acid is used as the thermoplastic resin (A), the decomposition, gas generation and discoloration of the resin caused by the temperature increase in forming processing can be suppressed.

The organic compound (B) is preferably such that the polarity or the solubility parameter (hereinafter, referred to as SP value) of the organic compound (B) is equal to or lower than that of the base material thermoplastic resin (A), and the difference in the SP value falls within a range of 30% in relation to the SP value of the thermoplastic resin (A). Organic compounds having the same value for the SP values thereof are generally compatible with each other, with some cases where the molecular weight and steric structure lead to incompatibility. In this connection, when the SP value of the organic compound (B) is equal to the SP value of the thermoplastic resin (A), it is necessary that the organic compound (B) have the factors such as the molecular weight and the steric structure to inhibit the compatibility with the thermoplastic resin (A) and thus the organic compound (B) be incompatible with the thermoplastic resin (A). When the SP value difference is 30% or less in relation to the value of the base material thermoplastic resin (A), even in the case where functional groups having reaction activity are included in part of the molecular structure of the organic compound (B), the macroscopic phase segregation caused by the organic compound (B) in the thermoplastic resin (A) can be suppressed, and thus the degradation of the thermal conductive property can be suppressed.

Additionally, under the condition that the organic compound (B) has a lower polarity or a lower SP value than that of the base material thermoplastic resin (A), there can be suppressed the behavior that the fibrous filler (C), such as carbon fiber and nitride having a surface of a chemically inert hydrophobic structure, undergoes cohesion in the resin component due to the strong hydrophobic interaction with the organic compound (B). Further, the organic compound (B) having the SP value falling within the above-described range is finely dispersed along with the fibrous filler (C) in the thermoplastic resin (A), and hence the dispersibility of the fibrous filler (C) can be further improved.

Here, as the SP value, from a qualitative point of view, there can be applied a value theoretically derived by using the group contribution method which is used in a general purpose manner. Specifically, such a value can be derived by using formula (1). For the individual physical property values needed for the derivation, either literature values (for example, described in D. W. Van Krevelen and P. J. Hoftyzer, PROPERTY OF POLYMERS: THEIR ESTIMATION AND CORRELATION WITH CHEMICAL STRUCTURE, Elsevier, New York, 1976) or experimental values may be used.

$$\delta = (\Sigma Ecohi/\Sigma EVmi)^{1/2} \qquad\qquad (1)$$

$\delta$: Solubility parameter (SP value)
Ecohi: Molar cohesion energy of each group
EVmi: Molar volume of each group
The organic compound (B) is preferably a low-molecular-weight compound, having a melting point of 80°C to 200°C and a molecular weight of 2000 or less, selected from an ester compound, an olefin compound, a carbonate compound, an amide compound, a hydrogenated fat, a synthetic wax and mixtures of these. Such a type of organic compound hardly causes a problem of molecular weight decrease due to reactions such as hydrolysis and ester exchange reaction and is low in melt viscosity in relation to the base resin such as a polyester resin, and hence has an advantage of being easily finely dispersed in the base material resin because of being low in melt viscosity.

Preferable examples of the such organic compound (B) may include crystalline organic compounds selected from the below-listed compounds each having 8 to 44 carbon atoms in the main chain of the molecular structure and having a molecular weight of 200 to 1500, more preferably 300 to 1000: aliphatic carboxylic acid amides, aromatic carboxylic acid amides, aliphatic carboxylic acid esters, aromatic carboxylic acid esters and the like. These may be used each alone or in combinations of two or more thereof. The crystalline organic compounds having such specific number of carbon atoms and such specific molecular weight can be synthesized, in many cases, from natural fats such as plant fats and animal fats, are easy to handle and additionally are in many cases obtainable at low prices. Additionally, when the base material of the thermoplastic resin (A) is a crystalline resin, the organic compound (B) serves as a crystal nucleation agent to provide an advantageous effect that the forming cycle can be drastically reduced in time. The above-listed aliphatic carboxylic acid amides, aromatic carboxylic acid amides, aliphatic carboxylic acid esters and aromatic carboxylic acid esters are each preferably a compound having one or two or more polar groups introduced into the molecule of the compound. Examples of such polar groups may include: oxygen-containing groups such as a hydroxyl group, a carboxyl group and a glycidyl group; nitrogen-containing groups such as an amino group, a nitro group, a cyano group and an isocyanate group; and fluorine-containing groups. Because the above-described compounds in which polar groups are partially introduced thereinto have the interaction with the fibrous filler (C), and at the same time has the physicochemical interaction, such as hydrogen bonding, with the base material thermoplastic resin (A), the above-described compounds have a binder-like effect to enhance the interaction with each of the base material thermoplastic resin (A) and the fibrous filler (C) and thus can improve the mechanical strength in the formed body.

Specific examples of the organic compound (B) may include: carboxylic acid amides such as ricinoleic acid amide, linoleic acid amide, linolenic acid amide, arachic acid amide, lauric acid amide, palmitic acid amide, oleic acid amide, stearic acid amide, erucic acid amide, N-oleylpalmitic acid amide, N-oleyloleic acid amide, N-oleylstearic acid amide, N-stearyloleic acid amide, N-stearylstearic acid amide, N-stearylerucic acid amide, methylenebisstearic acid amide, ethylenebislauric acid amide, ethylenebiscapric acid amide, ethylenebisoleic acid amide, ethylenebisstearic acid amide, ethylenebiserucic acid amide, ethylenebisisostearic acid amide, butylenebisstearic acid amide and p-xylenebisstearic acid amide; carboxylic acid esters such as lauric acid ester, palmitic acid ester, oleic acid ester, stearic acid ester, erucic acid ester, N-oleylpalmitic acid ester, N-oleyloleic acid ester, N-oleylstearic acid ester, N-stearyloleic acid ester, N-stearylstearic acid ester, N-stearylerucic acid ester, methylenebisstearic acid ester, ethylenebislauric acid ester, ethylenebiscapric acid ester, ethylenebisoleic acid ester, ethylenebisstearic acid ester, ethylenebiserucic acid ester, ethylenebisisostearic acid ester, butylenebisstearic acid ester and p-xylenebisstearic acid ester; and the compounds prepared by introducing polar groups into part of each of these molecules.

Particularly preferable among the above-listed organic compounds (B) are the carboxylic acid amide compounds derived from castor oil; specific examples may include ricinoleic acid amide, stearic acid amide, oleic acid amide, palmitic acid amide, linoleic acid amide, linolenic acid amide, arachic acid amide, and the derivatives of these. These compounds have extremely excellent thermal conductive property, and additionally, because of being derived from biomass, are excellent in environmental adaptability and have safety, productivity, cost efficiency and biological affinity; further, these compounds are excellent in dispersion controllability in relation to polyester resins, serve as crystal nucleation agents, and can form network structures with the fibrous filler (C).

The content of the organic compound (B) in the thermally conductive resin material is preferably 0.5 to 20% by mass and more preferably 1 to 15% by mass. When the content of the organic compound (B) is 0.5% by mass or more, the melt viscosity of the resin material can be made sufficiently low, and the fibrous filler (C) can be dispersed to a sufficient extent. On the other hand, when the content of the organic compound (B) is 20% by mass or less, the recohesion of the finely dispersed organic compound (B) is suppressed, the degradation of the mechanical strength due to the macroscopic phase segregation can be suppressed, the exposure of the organic compound (B) to the surface wherein the organic compound (B) undergoes cohesion in the obtained formed body is suppressed, and the occurrence of defective appearance and defective coating can be suppressed.

The fibrous filler (C) used in the thermally conductive resin material of the present invention is only required to be fibrous. In general, the thermal conductivity itself of the thermally conductive resin material is depend on the intrinsic thermal conductivity and the addition amount of the fibrous filler (C) in many cases; thus, the fibrous filler (C) can be used by appropriately selecting the type and the addition amount thereof according to the required degree of the thermal conductive property and the types of the thermoplastic resin (A) and the organic compound (B).

Specifc example of the fibrous filler (C) may include inorganic materials such as carbon, nitride, carbide, boride and metals; more preferable examples may include carbon fiber, boron nitride, aluminum nitride, silicon nitride, silicon carbide and metal whisker. These may be used each alone or in combinations of two or more thereof. These inorganic materials each have a thermal conductivity of 50 W/m.K or more, and permit obtaining formed bodies having excellent thermal conductive property. When the thermal conductivity of the fibrous filler is less than 50 W/m.K, the electric conductivity of the resin material in which the fibrous filler is perfectly uniformly dispersed comes to be 1 W/m.K or less, as the case may be. Such a fibrous filler has an excellent thermal conductive property particularly in the fiber axis direction; in injection molding or the like, the fiber axis is oriented in the flow direction of the resin, so as to enable the control of the direction and the transfer amount of the thermal conduction in the formed body, and thus a formed body provided with anisotropic thermal conductive property can be molded.

Here, as the thermal conductivity, there can be adopted measurement values based on the measurement methods such as a laser flash method, a plate heat flow meter method, a temperature wave thermal analysis method (TWA method) and a temperature gradient method (a plate comparison method).

Preferable among the above-described materials is carbon fiber because the density of carbon fiber is smaller as compared to other fillers, and additionally the thermal conductivity in the fiber axis direction is higher than those of metals and an extremely small addition amount of carbon fiber can improve the thermal conductive property of the resin. Further, carbon fiber is almost free from adverse effects on the environmental destruction such as toxicity; excellent in practical properties such as lightness in weight, forming processability and mechanical strength; relatively lower in price; and suitable as materials. Examples usable as the above-described carbon fiber include PAN-derived carbon fiber, pitch-derived carbon fiber, and carbon fibers synthesized by means of the methods such as an arc discharge method, a laser vaporization method, a CVD method (chemical vapor deposition method) and a CCVD method (catalytic chemical vapor deposition method). Among these, the pitch-derived carbon fiber, the carbon fibers based on the vapor phase methods, and the carbon fibers obtained by further applying graphitization treatment are excellent in crystallinity and in the thermal conductivity in the fiber axis direction, and hence are preferable. In particular, mesophase pitch-derived carbon fiber, and carbon (nano)tube, carbon (nano)horn and carbon fibers prepared in the vapor phase have a graphite structure anisotropic in the fiber axis direction, accordingly have a thermal conductivity equal to or higher than those of metals, and hence can impart a higher thermal conductive property to the base material of the thermoplastic resin (A).

The fibrous filler (C) preferably has an average fiber length of 0.2 mm or more and 50 mm or less and more preferably 0.5 mm or more and 50 mm or less. The fibrous filler (C) having such an average fiber length, in cooperation with the average particle size of the organic compound (B), extremely easily forms the above-described network structure of the filler even for a low mixing ratio, thus the elements of the fibrous filler (C) are in a state of being mutually extremely close to each other or brought into direct contact with each other through the intermediary of the organic compound (B), accordingly the contact area between the elements of the fibrous filler (C) or the effective area of the fibrous filler (C) involved in thermal conduction is increased to drastically decrease the thermal resistance, and consequently the propagation loss of thermal energy is remarkably reduced to enable an efficient thermal conduction. Additionally, at the time of forming, the orientation of the fibrous filler (C) in the flow direction of the resin or the surface direction of the resin is facilitated, and hence the obtained formed body is extremely improved both in the thermal conductive property and in the anisotropic thermal conductive property as compared to conventional formed bodies.

The average fiber length of the fibrous filler (C) is, in the formed body, preferably 0.5 or more times the thickness of the formed body, for the purpose of forming an in-plane orientation, namely, a two-dimensional network structure. The thickness of the formed body such as a component or a chassis of an electronic apparatus is generally 0.4 mm or more, and thus, the fibrous filler (C) preferably has a fiber length of 0.2 mm or more. On the other hand, when the average fiber length of the fibrous filler (C) is 50 mm or less, a condition can be suppressed in which the mixing with resin and the forming are made difficult by the tangling of the elements of the fibrous filler (C) and the nozzle clogging can be suppressed at the time of injection molding.

Additionally, it is preferable to make the fibrous filler (C) contain a fibrous filler (D) having a fiber length shorter than the above-described fiber length. Preferable examples of the fibrous filler (D) shorter in fiber length may include carbon fiber and the aggregates thereof. As the average fiber length of the fibrous filler (D), a length of less than 0.2 mm may be quoted, and as a preferable range, a range of 5 nm or more and 50 $\mu$m or less may be quoted. By a combination of the such fibrous filler (D) and the fibrous filler (C), the antistatic property and the electromagnetic wave shielding property can be further improved. This makes it possible that the fibrous filler (D) is present in a random state in relation to the fibrous filler (C) longer in fiber length, and consequently the electric conductive property of the resin material is improved and the properties, such as thermal conductive property, of the obtained formed body is further improved.

The content of the such fibrous filler (D) shorter in fiber length may be set at 0.5 to 20% by mass in relation to the total mass of the thermally conductive resin material.

Here, as the average fiber length of the fibrous filler, there can be adopted values obtained by the measurement methods such as a microscopic method, a laser diffraction and scattering method and a dynamic light scattering method.

It is preferable to use as the fibrous filler (C) a fibrous filler having an average diameter of larger than 1 $\mu$m and 200$\mu$m or less. When the average diameter of the fibrous filler (C) is larger than 1 $\mu$m, a propensity for cohesion is low and the fibrous filler (C) can be easily dispersed in the resin. On the other hand, when the average diameter is 200 $\mu$m or less, the fibrous filler (C) can be uniformly dispersed in the resin, and the occurrence of defective appearance due to the exposure of the aggregates of the fibrous filler (C) to the surface of the formed body can be suppressed. The average diameter of the such fibrous filler (C) can be obtained by means of a microscopic method.

The fibrous filler (C) preferably has an aspect ratio of 500 or more and 50000 or less. As described above, the average fiber length of the fibrous filler (C) is preferably 0.5 mm or more and 50 mm or less, and the average diameter of the fibrous filler (C) is preferably larger than 1 $\mu$m and 100$\mu$m or less, and accordingly, from the ratio of the average fiber length to the average diameter, a value of 500 or more and 50000 or less is preferable as the aspect ratio.

The fibrous filler (C) is preferably crystalline. In electrically conductive materials such as metals, the thermal conductivity depends on the mobility of the conduction electron; however, in the materials such as ceramics and carbon, the lattice vibration largely contributes to the thermal conduction. Accordingly, in particular, in the fibrous filler (C) made of a material such as a ceramic or carbon, the thermal conductive property can be made higher on the basis of the high crystallinity. Examples of a method for enhancing the crystallinity in the fibrous filler (C) made of a ceramic or carbon may include a heat treatment at 500 to 3000°C under a nonoxidative atmosphere. When the fibrous filler is a product formed by a vapor phase method at a high temperature, the fibrous filler is highly crystallized as the case may be; in such a case, no crystallinity enhancing treatment is necessary.

The fibrous filler (C) may be used, according to need, after partially or wholly having been subjected to a surface treatment. Specific examples of the surface treatment may include an oxidation treatment, a nitridation treatment, a nitration treatment, a sulfonation treatment and a treatment in which to the functional groups introduced to the surface by these treatment or to the surface of the fibrous filler (C), a metal, a metal compound, an organic compound and the like are attached or bonded. Examples of the above-described functional groups may include oxygen-containing groups and nitrogen-containing groups such as a hydroxyl group, a carboxyl group, a carbonyl group, a nitro group and an amino group. The fibrous filler (C) having such functional groups and compounds introduced to part of the surface thereof is strong in chemical interaction with the base material thermoplastic resin (A) such as a polyester resin, and the mechanical strength is improved in the obtained formed body.

Examples of the surface treatment of the fibrous filler (C) may also include a treatment in which functional groups or compounds interacting with the organic compound (B) are bonded or attached to the surface. The fibrous filler (C) having been subjected to such a surface treatment is enhanced in the bonding with the organic compound (B) and can further improve the thermal conductive property of the formed body. Specific examples of such a surface treatment may include, for the case where the fibrous filler (C) is carbon fiber, a surface treatment with various carboxylic acids and the like.

Further, the fibrous filler (C) may be a filler with the surface having been hydrophobized for the purpose of enhancing the interaction with the resin component. Examples of the hydrophobizing method may include a method in which a heat treatment is conducted in an inert gas atmosphere and a fluorination treatment. The fibrous filler (C) having been subjected to such a hydrophobizing treatment exhibits a stronger interaction with a low polarity resin.

The content of the fibrous filler (C) in the thermally conductive resin material is preferably 1 to 40% by mass and more preferably 5 to 20% by mass in relation to the total mass. When the content of the fibrous filler (C) is 1% by mass or more, the resin material can have a sufficient thermal conductive property. On the other hand, when the content of the fibrous filler (C) is 40% by mass or less, even in a case where the fibrous filler (C) is low in density, in the thermally conductive resin material, the increase of the volume fraction is suppressed and the increase of the melt viscosity due to the mutual tangling of the elements of the filler is suppressed, and thus the thermally conductive resin material acquires an excellent forming processability.

In the thermally conductive resin material of the present invention, various additives can be mixed according to need. Examples of such additives may include a reinforcing agent, a flame retardant, a foaming agent, a deterioration inhibitor, a crystal nucleation agent, a colorant, an antioxidant, a heat resistance improver, a light resisting agent, a processing stabilizer, an antibacterial agent, a mildew proofing agent and a plasticizer. Specifically, usable as the reinforcing agent are fillers such as mica and talc, organic fibers such as aramid and polyarylate, glass fiber, and further, plant fiber such as kenaf. Specific examples of the flame retardant may include metal hydroxides such as aluminum hydroxide and magnesium hydroxide, nitrogen-containing flame retardants such as melamine and isocyanuric acid compounds and phosphorus-containing flame retardants such as phosphoric acid compounds. Additionally, appropriately usable are various inorganic and organic crystal nucleation agents, colorants such as titanium oxide, stabilizers such as a radical trapping agent, an antioxidant and a hydrolysis inhibitor and antibacterial agents such as silver ion.

As the method for producing the thermally conductive resin material of the present invention, there can be used a method in which the above-described various components are mixed together. Examples of such a mixing method may include, in addition to the mixing by means of hand mixing, methods of melt mixing by using a tumbler mixer, a ribbon blender, a single-screw, multi-screw mixing extruder or a roll. Preferably used among these are a tumbler mixer, a ribbon mixer and a single-screw extruder which are relatively weak in mixing strength because the fracture or crushing of the fibrous filler (C) can be suppressed in the mixing step, and thus there can be obtained a formed body on which a high thermal conductive property inherent to the fibrous filler (C) is reflected. Additionally, in a case where two or more additives are added to the thermoplastic resin (A) or in a like case, effective is a method in which the additives other than the fibrous filler (C) are added to be mixed in advance, and thereafter the fibrous filler (C) is added for the purpose of reducing the mixing time of the fibrous filler (C) so as to reduce the fracture or crushing of the fibrous filler (C). Additionally, for the purpose of ensuring sufficient fluidity at the time of melt-mixing, preferably the equipment conditions such as the adjustment of the clearance in the cylinder of the mixing machine, the number of rotations of the screw or the stirring blade, the melting temperature conditions and the like are appropriately regulated.

The thermally conductive resin formed body of the present invention is characterized by being formed by using the above-described thermally conductive resin material. As the forming method of the thermally conductive resin formed body, there can be applied the methods used for forming thermoplastic resins, such as an injection molding method, an injection compression molding method and a compression molding method. Preferably, the temperatures at the time of these melt mixing and forming are equal to or higher than the melting point of the thermoplastic resin (A) to be the base material and additionally fall within a range where the individual components are free from deterioration.

The thermally conductive resin formed body of the present invention may have, in the upper or lower portion thereof, a laminated structure or a coating film composed of a resin different in thermal conductive property. Specifically, such a coating film may be disposed by adhering a thin film or laminating a member formed by using a raw material such as a resin different in the concentration, addition amount and orientation direction of the filler, a resin different in ingredients or a resin different in type. In the thermally conductive resin formed body in which formed is a coating film made of such a laminated structure or such a thin film, the directionality of the thermal conductive property can also be controlled in a three-dimensional manner. In particular, the resin coating film, low in thermal conductive property, disposed in the upper or lower portion of the thermally conductive resin formed body can avoid the condition that heat is directly transferred from a heat source to the surface of the formed body, and is particularly effective as a countermeasure against the low-temperature burn in chassis of electronic apparatuses and the like.

Additionally, the thermally conductive resin formed body of the present invention may have, on the surface thereof, a laminated structure or a coating film made of a material excellent in thermal emission function. The provision of such a coating film can improve the heat release property of the formed body.

Additionally, the thermally conductive resin formed body of the present invention may have, on the surface thereof, a laminated structure or a coating film made of a material different in thermal capacity. The provision of such a coating film can alleviate the temperature variation on the surface of the formed body, and hence it is effective in apparatuses directly brought into contact with human body or living organism or precision apparatuses incompatible with thermal variation.

Examples

Hereinafter, the thermally conductive resin material and the formed body of the present invention are described specifically and in detail, but the technical scope of the present invention is not limited by the following descriptions.

[Examples 1 to 17 and Comparative Examples 1 to 8]

[Preparation of thermally conductive resin formed bodies]

In combination with a commercially available polylactic acid (manufactured by UNITIKA, Ltd., melting point: 170°C, $\delta$ = 21 to 22 [J/cm$^3$]$^{1/2}$), the carbon fibers shown in Table 1 as the fibrous filler (C) and the compounds shown in Table 2 as the organic compound (B) were placed in respective aluminum trays in the mixing amounts shown in Tables 3 to 6 (in these tables, the numerical values are given in percent by mass), and the mixtures thus obtained were mixed at 190 to 200°C over a period of approximately 1 minute by means of hand mixing.

The mixtures thus obtained were compression formed under the condition of 175°C and 70 x 70 x 2 mm, flat plate samples (Examples 1 to 17 and Comparative Examples 1 to 8) were obtained.

For the obtained flat plate sample (Example 1), an observation with an optical microscope (BIOPHOT, manufactured by Nikon Corp.) was conducted. A photographed image is shown in Figure 2. The observation of the photographed image revealed the condition that the spherical or elliptical particles of ethylenebisoleylamide (the dark portion indicated by an arrow) incompatible with the base material of polylactic acid were present on the surface of the carbon fiber in a scattered manner, and verified that the network structure shown in Figure 1 was formed in the flat plate sample.

[Evaluation of thermal conductive property]

For each of the obtained flat plate samples, the thermal conductive property was evaluated by using the two methods shown below. In consideration of the actual use environment for chassis of electronic apparatuses and the like, evaluated was the variation of the temperature diffusion on the formed body surface based on the balance between the thermal conductivity and the thermal capacity.

[In-plane thermal conductive property]

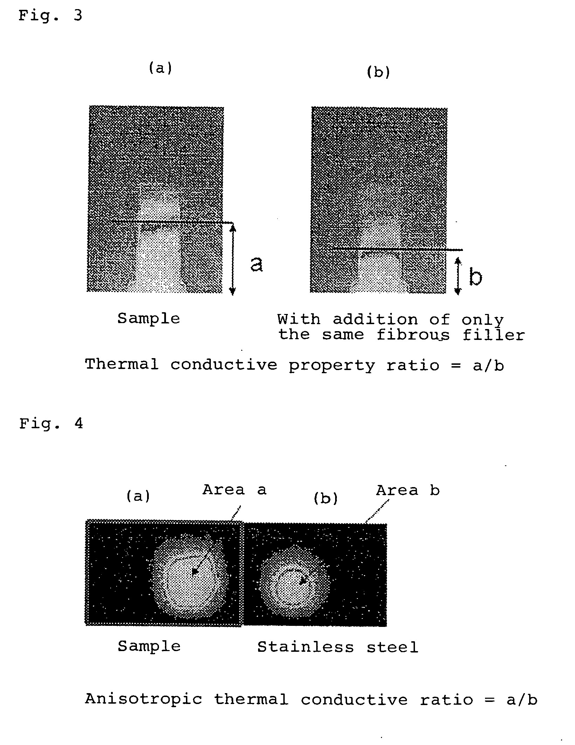

A flat plate sample was fixed on a supporting base, and stationary heat was loaded to a portion of the flat plate sample with a rubber heater beforehand heated to 80°C. The behavior of the heat diffusion all over the sample from the portion in contact with the rubber heater was measured with an infrared thermotracer (Thermoscanner TS5304, manufactured by NEC San-ei Co., Ltd.), and from the thermography analysis shown in Figure 3, the in-plane thermal conductive property was evaluated. A black-body coating material having a known emissivity was applied to the sample surface for the purpose of conducting measurement. The evaluation was determined on the basis of the ratio a/b of the thermal conductive property a (Figure 3(a)) of the sample to the thermal conductive property b (Figure 3(b)) obtained for the case where only the same fibrous filler was added. The evaluation standards were set as follows. The results thus obtained are shown in Tables 3 to 6.

E: The thermal conductive property is improved by a factor of 1.5 or more as compared to the case where only the same fibrous filler was added.

G: The thermal conductive property is 1.1 or more and less than 1.5 times that of the case where only the same fibrous filler was added.

A: The thermal conductive property is 0.9 or more and less than 1.1 times that of the case where only the same fibrous filler was added.

P: The thermal conductive property less than 0.9 times that of the case where only the same fibrous filler was added.

[Anisotropic thermal conductive property]

A flat plate sample was placed on an aluminum base, and a constant amount of heat was loaded to the sample by placing on the sample a weight having been beforehand heated to 80°C. The behavior of the heat spreading from the position of the weight within predetermined times from the disposition of the weight was measured with the thermotracer in the same manner as above.

Figure 4 shows a thermography showing a comparison of the heat spreading behavior between the flat plate sample of Example 1 and a stainless steel plate.

By examining the heat spreading in the flat plane, the anisotropic thermal conductive property in the plane direction was evaluated. The evaluation was determined on the basis of the ratio a/b of the anisotropic thermal conductive area a (Figure 4(a)) of the sample to the anisotropic thermal conductive area b (Figure 4(b)) of the stainless steel plate. The evaluation standards were set as follows.

G: The heat spreading (area) after an elapsed time of 1 minute is 1.5 or more times that of the same-shaped stainless steel plate.

A: The heat spreading (area) after an elapsed time of 1 minute is 1.1 or more and less than 1.5 times that of the same-shaped stainless steel plate.

P: The heat spreading (area) after an elapsed time of 1 minute is less than 1.1 times that of the same-shaped stainless steel plate.

[Table 1]

| Fibrous filler | Fiber diameter ($\mu$m) | Fiber length (mm) | Aspect ratio | Production method, type method, type |
|---|---|---|---|---|
| Carbon fiber A | 10 | 6 | 600 | Anisotropic pitch |
| Carbon fiber B | 10 | 30 | 3000 | Anisotropic pitch |
| Carbon fiber C | 2 | 0.5 | 250 | Anisotropic pitch |
| Carbon fiber D | 2 | 1 | 500 | Anisotropic pitch |
| Carbon fiber E | 2 | 5 | 2500 | Anisotropic pitch |
| Carbon fiber F | 2 | 20 | 10000 | Anisotropic pitch |
| Carbon fiber G | 50 | 30 | 600 | Anisotropic pitch |
| Carbon fiber H | 50 | 1 | 20 | Anisotropic pitch |
| Carbon fiber I | 9 | 0.3 | 33 | Anisotropic pitch |
| Carbon fiber J | 0.1 | 0.01 | 100 | Vapor phase |

[Table 2]

| Organic compound | Substance name | Solubility parameter [J/cm$^3$]$^{1/2}$ |
|---|---|---|
| a | Ethylenebisoleylamide | 19.6 |
| b | Ethylenebisstearylamide | 19.7 |

(continued)

| Organic compound | Substance name | Solubility parameter $[J/cm^3]^{1/2}$ |
|---|---|---|
| c | Ethylenebis-1 2-hydroxystearylamide | 22.0 |
| d | Hexamethylenebisrecinoleylamide | 19.8 |
| e | Low-molecular-weight polypropylene wax | 17 |
| f | Polybutylene succinate | 21 |
| Polylactic acid: $\delta = 21\text{-}22(J/cm^3)^{1/2}$ <br> a to e: Incompatible <br> f: Compatible | | |

[Table 3]

| | Examples | | | | | |
|---|---|---|---|---|---|---|
| | 1 | 2 | 3 | 4 | 5 | 6 |
| Polylactic acid | 85 | 90 | 94 | 89 | 85 | 70 |
| Carbon fiber A <br> Carbon fiber B | 5 <br> - | 5 <br> - | 5 <br> - | - <br> 1 | - <br> 5 | - <br> 20 |
| Incompatible organic compound a | 10 | 5 | 1 | 10 | 10 | 10 |
| In-plane thermal conductive property | E | G | G | G | E | E |
| Anisotropic thermal conductive property | G | G | G | G | G | G |

[Table 4]

| | Examples | | | | | |
|---|---|---|---|---|---|---|
| | 7 | 8 | 9 | 10 | 11 | 12 |
| Polylactic acid | 80 | 80 | 80 | 80 | 80 | 60 |
| Carbon fiber C <br> Carbon fiber D <br> Carbon fiber E <br> Carbon fiber F <br> Carbon fiber G <br> Carbon fiber I | 10 <br> - <br> - <br> - <br> - <br> - | - <br> 10 <br> - <br> - <br> - <br> - | - <br> - <br> 10 <br> - <br> - <br> - | - <br> - <br> - <br> 10 <br> - <br> - | - <br> - <br> - <br> - <br> 10 <br> - | - <br> - <br> - <br> - <br> - <br> 30 |
| Incompatible organic compound a | 10 | 10 | 10 | 10 | 10 | 10 |
| In-plane thermal conductive property | G | G | E | E | G | E |
| Anisotropic thermal conductive property | G | G | G | G | G | G |

[Table 5]

| | Examples | | | | |
|---|---|---|---|---|---|
| | 13 | 14 | 15 | 16 | 17 |
| Polylactic acid | 85 | 85 | 85 | 85 | 85 |

(continued)

| | Examples | | | | |
|---|---|---|---|---|---|
| | 13 | 14 | 15 | 16 | 17 |
| Incompatible organic compound a | 10 | - | - | - | - |
| Incompatible organic compound b | - | 10 | - | - | - |
| Incompatible organic compound c | - | - | 10 | - | - |
| Incompatible organic compound d | - | - | - | 10 | - |
| Incompatible organic compound e | - | - | - | - | 10 |
| Carbon fiber A | 5 | 5 | 5 | 5 | 5 |
| In-plane thermal conductive property | E | E | G | E | G |
| Anisotropic thermal conductive property | G | G | G | G | G |

[Table 6]

| | Comparative Examples | | | | | | | |
|---|---|---|---|---|---|---|---|---|
| | 1 | 2 | 3 | 4 | 5 | 6 | 7 | 8 |
| Polylactic acid | 95 | 95 | 95 | 95 | 85 | 85 | 85 | 85 |
| Carbon fiber A | 5 | - | - | - | 5 | - | - | - |
| Carbon fiber C | - | 5 | - | - | - | 5 | - | - |
| Carbon fiber H | - | - | 5 | - | - | - | 5 | - |
| Carbon fiber J | - | - | - | 5 | - | - | - | 5 |
| Incompatible organic compound f | - | - | - | - | 10 | 10 | 10 | 10 |
| In-plane thermal In-plane thermal conductive property | - | - | - | - | A | A | A | A |
| Anisotropic thermal conductive property | A | P | P | P | A | P | P | P |

In any of Examples 1 to 17, the in-plane thermal conductive property and the anisotropic thermal conductive property were improved as compared to Comparative Examples 1 to 4 in each of which only a carbon fiber was added and the organic compound (B) was not added. In particular, in Examples 1, 5, 6, 9 and 10 in each of which a carbon fiber controlled in the size and the aspect ratio was added in a mixing amount of 5% by mass or more, the thermal conductive property was largely improved. Additionally, a remarkable improvement of the thermal conductive property was found in any of Examples 1 and 13 to 17 in each of which any one of the organic compounds a to e was added as the organic compound (B) having a solubility parameter lower than that of polylactic acid and having a difference from that of polylactic acid falling within 30% of that of polylactic acid.

On the other hand, in any of Comparative Examples 5 to 8 in each of which polybutylene succinate (manufactured by Mitsubishi Chemical Corp.) compatible with polylactic acid was added, the thermal conductive property was found to be comparable with that of the case where a carbon fiber was singly added.

Additionally, it is obvious that a high thermal conductive property is obtained owing to the network structure identified by the observation with a microgram.

Further, from the thermography photographed with a thermotracer, it is obvious that an anisotropic thermal conductive property tends to occur more easily, owing to the network structure, in the flat plate samples than in the stainless steel plate.

Industrial Applicability

The thermally conductive resin formed body obtained by using the thermally conductive resin material of the present invention can be applied to the chassis and components of heat-releasing apparatuses such as electronic apparatuses, and to home electric appliances, battery materials, thermal energy-conversion materials, automobile components, aircraft components, railway components, and generally all the formed bodies, in the space field and the like, required to have high degree of thermal conductive property.

**Claims**

1. A thermally conductive resin material comprising a base material of a thermoplastic resin (A) and a fibrous filler (C), **characterized in that** an organic compound (B) incompatible with the resin component is present as dispersed particles in the resin component, two or more elements of the fibrous filler (C) are in contact with the surface of each of the dispersed particles of the organic compound (B) or are located in each of the dispersed particles of the organic compound (B).

2. The thermally conductive resin material according to claim 1, **characterized in that** the fibrous filler (C) is in contact with each of the dispersed particles of the organic compound (B) in a network manner.

3. The thermally conductive resin material according to claim 1 or 2, **characterized in that** the fibrous fiber (C) has an average fiber length two times or more larger than the average particle size of the organic compound (B).

4. The thermally conductive resin material according to any of claims 1 to 3, **characterized in that** the fibrous filler (C) has an average fiber length of 0.2 mm or more and 50 mm or less.

5. The thermally conductive resin material according to any of claims 1 to 4, **characterized in that** the fibrous filler (C) has an average diameter of larger than 1 $\mu$m and 100 $\mu$m or less.

6. The thermally conductive resin material according to any of claims 1 to 5, **characterized in that** the fibrous filler (C) has an aspect ratio of 500 or more and 50000 or less.

7. The thermally conductive resin material according to any of claims 1 to 6, **characterized in that** the fibrous filler (C) is included in an amount of 1 to 40% by mass in relation to the total mass.

8. The thermally conductive resin material according to any of claims 1 to 7, **characterized in that** the fibrous filler (C) includes an inorganic material comprising one or two or more selected from carbon, nitride, carbide, boride and a metal and having a thermal conductivity of 50 W/m·K or more.

9. The thermally conductive resin material according to any of claims 1 to 8, **characterized in that** the fibrous filler (C) includes a crystalline carbon fiber.

10. The thermally conductive resin material according to any of claims 1 to 9, **characterized in that** the fibrous filler (C) has one or two or more polar groups selected from an oxygen-containing group, a nitrogen-containing group and a sulfur-containing group, or the polar group or the fibrous filler (C) includes one or two or more selected from a metal, a metal compound and an organic compound as bonded or attached thereto.

11. The thermally conductive resin material according to any of claims 1 to 10, **characterized in that** the fibrous filler (C) includes a fibrous filler (D) having an average fiber length of less than 0.2 mm.

12. The thermally conductive resin material according to claim 11, **characterized in that** the fibrous filler (D) is a carbon fiber having an average fiber length of 5 nm or more and 50 $\mu$m or less or an aggregate thereof.

13. The thermally conductive resin material according to claim 11 or 12, **characterized in that** the fibrous filler (D) is included in an amount of 0.5 to 20% by mass in relation to the total mass.

14. The thermally conductive resin material according to any of claims 1 to 13, **characterized in that** the organic compound (B) has an average particle size within a range from 0.1 to 500 $\mu$m.

15. The thermally conductive resin material according to any of claims 1 to 14, **characterized in that** the organic compound (B) is a low-molecular-weight compound of 2000 or less in molecular weight.

16. The thermally conductive resin material according to any of claims 1 to 15, **characterized in that** the organic compound (B) includes one or two or more selected from an ester compound, an olefin compound, a carbonate compound and an amide compound, and has a melting point of 80 to 200°C.

17. The thermally conductive resin material according to any of claims 1 to 16, **characterized in that** the organic compound (B) includes one or two or more selected from a plant fat, an animal fat and a wax-like substance synthesized from these.

18. The thermally conductive resin material according to any of claims 1 to 17, **characterized in that** the organic compound (B) includes one or two or more selected from an aliphatic carboxylic acid amide, an aromatic carboxylic acid amide, an aliphatic carboxylic acid ester and an aromatic carboxylic acid ester each having 8 to 44 carbon atoms main-chain, having a molecular weight of 300 to 1000 and optionally having a polar group.

19. The thermally conductive resin material according to claim 18, **characterized in that** the polar group includes one or two or more selected from the oxygen-containing group and the nitrogen-containing group.

20. The thermally conductive resin material according to claim 18 or 19, **characterized in that** the organic compound (B) includes a carboxylic acid amide compound derived from castor oil.

21. The thermally conductive resin material according to claim 20, **characterized in that** the organic compound (B) includes ricinoleic acid amide, stearic acid amide, oleic acid amide, palmitic acid amide, linoleic acid amide, linolenic acid amide, arachic acid amide, or the derivatives of these.

22. The thermally conductive resin material according to any of claims 1 to 20, **characterized in that** the organic compound (B) is included in an amount of 0.5 to 20% by mass in relation to the total mass.

23. The thermally conductive resin material according to any of claims 1 to 22, **characterized in that** the thermoplastic resin (A) includes a polystyrene resin and/or a polyester resin.

24. The thermally conductive resin material according to any of claims 1 to 23, **characterized in that** the thermoplastic resin (A) includes one or two or more selected from polylactic acid, polycaprolactone, polybutylene succinate, polyhydroxyalkanoate, cellulose acetate, starch resin, the derivatives of these, and the alloys of these with petroleum polyester resins.

25. The thermally conductive resin material according to any of claims 1 to 24, **characterized in that** the thermoplastic resin (A) includes one or two or more of polylactic acid, a polylactic acid derivative and a polylactic acid alloy.

26. A thermally conductive resin formed body **characterized by** being formed by using the thermally conductive resin material according to any one of claims 1 to 25.

27. The thermally conductive resin formed body according to claim 26 **characterized in that** the fibrous filler (C) has an average fiber length of 0.5 or more times and 100 or less times the thickness of the formed body.

28. The thermally conductive resin formed body according to claim 26 or 27 **characterized by** being formed by means of injection molding.

29. The thermally conductive resin formed body according to claim 26 or 27 **characterized by** being formed by means of compression molding.

Fig. 1

Fig. 2

0.5mm

Fig. 3

(a)                              (b)

a                                b

Sample                      With addition of only
                            the same fibrous filler

Thermal conductive property ratio = a/b

Fig. 4

(a)      Area a      (b)      Area b

Sample              Stainless steel

Anisotropic thermal conductive ratio = a/b

**INTERNATIONAL SEARCH REPORT**

| International application No. |
| --- |
| PCT/JP2007/057774 |

A. CLASSIFICATION OF SUBJECT MATTER
*C08L101/00*(2006.01)i, *C08K5/20*(2006.01)i, *C08K7/04*(2006.01)i, *C08K13/04* (2006.01)i, *C09K5/08*(2006.01)i

According to International Patent Classification (IPC) or to both national classification and IPC

B. FIELDS SEARCHED

Minimum documentation searched (classification system followed by classification symbols)
C08L1/00-101/16, C08K3/00-13/08

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 61-266464 A  (Tokyo Printing Ink Mfg. Co., Ltd.),<br>26 November, 1986 (26.11.86),<br>Claims; page 2, lower left column, line 6 to page 3, upper left column, line 2; page 3, lower left column, lines 2 to 4; example 3<br>(Family: none) | 1-9,11-29<br>10 |
| X<br>Y | JP 7-41648 A  (Mitsubishi Rayon Co., Ltd.),<br>10 February, 1995 (10.02.95),<br>Claims; Par. Nos. [0013] to [0015], [0017]; examples<br>(Family: none) | 1-9,11-29<br>10 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 April, 2007 (23.04.07) | Date of mailing of the international search report<br>01 May, 2007 (01.05.07) |
| --- | --- |
| Name and mailing address of the ISA/<br>   Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2007/057774 |

C (Continuation).    DOCUMENTS CONSIDERED TO BE RELEVANT

| Category* | Citation of document, with indication, where appropriate, of the relevant passages | Relevant to claim No. |
|---|---|---|
| X | JP 9-272802 A  (Hoechst AG.),<br>21 October, 1997 (21.10.97),<br>Claims; Par. No. [0007]<br>& EP 791632 A2           & KR 97061946 A<br>& US 5889102 A           & MX 9701314 A1<br>& TW 378218 A            & ES 2181938 A | 1-29 |
| X<br>Y | JP 2006-83239 A  (Toray Industries, Inc.),<br>30 March, 2006 (30.03.06),<br>Claims; Par. Nos. [0011], [0055], [0069],<br>[0092]; examples<br>& EP 791632 A2           & KR 97061946 A<br>& US 5889102 A           & MX 9701314 A1<br>& TW 378218 A            & ES 2181938 A | 1-6,8-29<br>10 |
| X<br>Y | JP 6-9819 A  (Teijin Chemicals Ltd.),<br>18 January, 1994 (18.01.94),<br>Claims; Par. Nos. [0007], [0008], [0013];<br>examples<br>(Family: none) | 1-15,22-29<br>10 |
| X<br>Y | JP 11-158348 A  (Ticona GmbH),<br>15 June, 1999 (15.06.99),<br>Claims<br>& EP 905190 A1           & CZ 9803133 A<br>& US 6046141 A           & KR 99030220 A<br>& ES 2241086 A | 1-9,11-15,<br>22-29<br>10 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005325345 A
- JP 2005054094 A
- JP 2603511 B

**Non-patent literature cited in the description**

- **TOKODAI.** Technology. Tokyo Institute of Technology, March 2000, vol. 3, 7
- **D. W. VAN KREVELEN ; P. J. HOFTYZER.** PROPERTY OF POLYMERS: THEIR ESTIMATION AND CORRELATION WITH CHEMICAL STRUCTURE. Elsevier, 1976